(19) Europäisches Patentamt

European Patent Office

Office européen des brevets

(11) **EP 1 431 634 B1**

(12) **FASCICULE DE BREVET EUROPEEN**

(45) Date de publication et mention
de la délivrance du brevet:
**08.03.2006 Bulletin 2006/10**

(51) Int Cl.:
*F16K 3/08* (2006.01)    *F16K 3/02* (2006.01)
*G03B 9/12* (2006.01)

(21) Numéro de dépôt: **02447266.4**

(22) Date de dépôt: **20.12.2002**

(54) **Dispositif de contrôle de flux de précision par des obturateurs multiples**

Präzisionvorrichtung zur Durchflussregelung mit mehreren Verschlusselementen

Precision flow control apparatus with multiple obturators

(84) Etats contractants désignés:
**BE DE FR GB**

(43) Date de publication de la demande:
**23.06.2004 Bulletin 2004/26**

(73) Titulaire: **Techspace Aero S.A.**
**4041 Herstal (BE)**

(72) Inventeurs:
• **Promper, Christophe**
**4800 Verviers (BE)**
• **Badinand, Thomas**
**4000 Liege (BE)**

(74) Mandataire: **Van Malderen, Joelle et al**
**Office Van Malderen,**
**Boulevard de la Sauvenière, 85/043**
**4000 Liège (BE)**

(56) Documents cités:
**GB-A- 883 911**        **US-A- 5 417 083**

• **PATENT ABSTRACTS OF JAPAN vol. 009, no. 210 (P-383), 28 août 1985 (1985-08-28) & JP 60 070427 A (ASAHI KOUGAKU KOGYO KK), 22 avril 1985 (1985-04-22)**

EP 1 431 634 B1

**Description**

**Objet de l'invention**

La présente invention se rapporte à une classe de dispositifs, tels que des vannes de régulation, destinés au contrôle proportionnel de flux.

Le vocable "flux" se rapporte à un fluide matériel, comme par exemple dans le cas d'une vanne contrôlant un écoulement liquide ou gazeux.

Un exemple de domaine d'application est le domaine des vannes de régulation de précision dans l'aéronautique.

**Etat de la technique**

On connaît des vannes de régulation proportionnelles présentant un moteur ou un actionneur qui pilote un obturateur simple de type boisseau, papillon, grille, etc.

Par exemple, le document US-A-5,417,083 décrit une vanne à flux variable conçue pour une installation en ligne dans un conduit acheminant un fluide, comprenant un disque fixe et un disque mobile pour contrôler le flux à travers la vanne. Le disque fixe et le disque mobile possèdent respectivement un premier et un deuxième ensemble de lumières, ces lumières étant de préférence de même taille et de même forme. Le disque mobile est couplé de manière rotative à l'appareil restricteur dans un plan parallèle au plan du disque fixe et perpendiculaire au flux. Un moteur pas à pas est couplé au disque mobile grâce à un actionneur linéaire. Le mouvement de l'actionneur linéaire provoque la rotation du disque mobile par rapport au disque fixe de sorte que les lumières du disque mobiles sont amenées sélectivement en et hors correspondance avec les lumières du disques fixe.

La précision absolue d'obturation résultante s'obtient directement par la combinaison de :

- la "précision", caractérisée par la reproductibilité d'un mouvement, la résolution ou le plus petit mouvement réalisable, l'hystérésis ou le jeu mécanique dans le système, etc., de l'actionneur ou élément moteur du dispositif décrit et,
- la précision relative à la caractéristique de l'obturateur utilisé : la linéarité ou l'évolution du caractère résistif, tel que chute de pression pour une vanne, etc., de l'obturateur en fonction de son déplacement, la reproductibilité de ce caractère résistif, le jeu mécanique de la transmission, etc.

On voit donc que dans le cas des vannes proportionnelles existantes, une exigence de très haute précision de l'obturation entraîne la nécessité d'avoir une très grande précision de réalisation des composants critiques de ces vannes, ce qui s'avère coûteux.

**Buts de l'invention**

La présente invention vise à fournir une solution permettant de s'affranchir des inconvénients de l'état de la technique.

En particulier, l'invention vise à obtenir un dispositif de contrôle de flux de très haute précision de coût raisonnable et ne nécessitant pas en particulier la réalisation de pièces de très haute précision.

**Principaux éléments caractéristiques de l'invention**

La présente invention se rapporte à un dispositif d'obturation pour le contrôle de précision d'un flux matériel, par exemple liquide ou gazeux, comprenant au moins un organe d'obturation d'une section de passage du flux, dont le mouvement est proportionnel à celui d'un actionneur qui le commande, caractérisé en ce que ledit dispositif comprend au moins deux organes d'obturation commandés par l'actionneur au moyen d'une transmission permettant d'obtenir des coefficients de proportionnalité légèrement différents pour le mouvement desdits organes.

Selon une première modalité d'exécution préférée de l'invention, lesdits organes d'obturation ont chacun un mouvement rotatif commandé par un arbre moteur, à mouvement manuel, électrique ou autre, au moyen d'une transmission permettant de leur transmettre le mouvement dudit arbre avec des rapports de transmission, de préférence de démultiplication, légèrement différents.

De préférence, ladite transmission est une transmission par engrenages, par galet ou par chaîne.

Le dispositif de l'invention consiste avantageusement en un obturateur à grille où lesdits organes d'obturation présentent chacun leur section de passage du flux ou ouverture ayant la forme d'une section de couronne de mêmes axe, rayons intérieur et extérieur, leur ouverture étant limitée à un angle $\alpha$ inférieur ou égal à $2\pi$, de préférence inférieur ou égal à $\pi$.

Selon une autre modalité d'exécution préférée de l'invention, lesdits organes d'obturation ont chacun un mouvement linéaire, de préférence sont des obturateurs-rideaux.

L'arbre moteur peut être équipé de deux pignons solidaires, dans le cas de deux obturateurs rotatifs ou à déplacement linéaire. L'arbre moteur peut également être équipé d'une double crémaillère, dans le cas de deux obturateurs rotatifs entraînés par un mouvement linéaire.

Un autre aspect de l'invention consiste en l'utilisation d'un dispositif d'obturation, tel que décrit ci-dessus, dans une vanne de régulation de haute précision, par exemple dans le domaine aéronautique et spatial.

### Brève description des figures

La figure 1 représente un exemple d'obturateur simple, à section de passage en forme de couronne partielle, à une ou plusieurs perforations, selon l'état de la technique.

La figure 2 représente un obturateur à deux organes présentant chacun une section de passage en forme de couronne partielle, selon la présente invention.

La figure 3 représente schématiquement l'obturateur à deux organes de la figure 2, où lesdits organes sont entraînés par une transmission à engrenages.

### Description d'une forme d'exécution préférée de l'invention

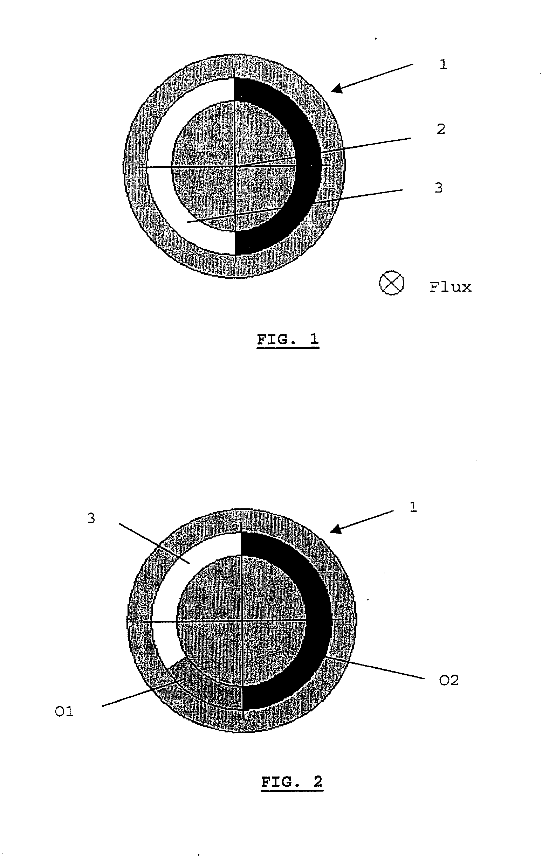

La présente invention sera décrite ci-après en faisant référence à un cas particulier de l'état de la technique représenté sur la figure 1 et constitué d'un obturateur rotatif simple 1 dont la section de passage 3 est une section de couronne d'axe 2 et d'ouverture $\alpha$ (par ex. $\alpha = \pi$).

Le dispositif proposé par la présente invention comporte :

    1. un actionneur mécanique ;

    2. un obturateur à deux organes, O1 et O2, qui se déplacent

- proportionnellement au mouvement de l'actionneur ;
- avec des coefficients de proportionnalité légèrement différents ;

    3. une transmission mécanique permettant précisément de transmettre le mouvement de l'actionneur avec des rapports de démultiplication légèrement différents.

Le principe de fonctionnement peut être détaillé par l'exemple suivant, qui se rapporte, comme mentionné plus haut, à des obturateurs rotatifs à section de passage en forme de couronne partielle d'angle $\alpha$ donné.

Soient :

- $\delta\theta_m$ un déplacement incrémental de l'actionneur rotatif,
- $i_1$ le rapport de transmission entre l'arbre de l'actionneur et l'obturateur O1 (voir. Fig. 2),
- $i_2$, le rapport de transmission entre l'arbre de l'actionneur et l'obturateur O2,
- $\varepsilon = i_2 - i_1$ ($\varepsilon \ll 1$),
- $\delta\theta_1 = i_1.\delta\theta_m$, le déplacement incrémental de l'obturateur O1, résultant d'un mouvement $\delta\theta_m$ de l'actionneur,
- $\delta\theta_2 = i_2.\delta\theta_m$, le déplacement incrémental de l'obturateur O2, résultant d'un mouvement $\delta\theta_m$ de l'actionneur,
- S1, la surface passante de l'obturateur O1,
- S2, la surface passante de l'obturateur O2,
- la forme des obturateurs étant par exemple une section de couronne d'ouverture $\alpha$ (radians) de rayon intérieur $r_{int}$ et de rayon extérieur $r_{ext}$, identiques pour les deux obturateurs,

$$S1 = S2 = S = \alpha.(r_{ext}^2 - r_{int}^2)/2 \ (0 < \alpha \leq 2\pi),$$

- une vanne comportant les éléments décrits ci-dessus dont les conditions initiales sont :

$$\theta_m = \theta_1 = 0_2 = 0.$$

Alors :

- pour un déplacement incrémental $\delta\theta_m$ de l'arbre de l'actionneur, on obtient un mouvement relatif des obturateurs égal à

$$\delta\theta = i_2.\delta\theta_m - i_1.\delta\theta_m = \varepsilon \;\cdot\; \delta\theta_m \;;$$

- l'évolution de la section de passage effective devient :

$$\delta S = \delta\theta.(r_{ext}{}^2 - r_{int}{}^2)/2 = \varepsilon.[\delta\theta_m.(r_{ext}{}^2 - r_{int}{}^2)/2] = \varepsilon \;\cdot\; \delta\theta_m \;.S/\alpha;$$

cette relation montre que si $\varepsilon$ est petit, un mouvement relativement important de l'arbre moteur conduit à une évolution faible de la section passante S. Par exemple, si $\alpha = \pi$ et $\varepsilon = 0,01$, alors un mouvement de l'arbre moteur d'amplitude $\pi$ (demi-tour) engendre une évolution de $0,01. \pi S/\pi$, c'est-à-dire égale à 1 % de la section passante ;
- l'obturateur O1 termine un tour après i (= $i_1$) tours de l'arbre moteur ;
- l'obturateur O2 termine un tour après (i+$\varepsilon$) tours de l'arbre moteur ;
- les deux obturateurs O1 et O2 seront à nouveau dans leurs positions initiales respectives après un nombre de tours égal à

$$i*(i+\varepsilon),$$

c'est-à-dire de l'ordre de $i^2$.

Le dispositif de la présente invention peut concrètement se présenter selon plusieurs formes d'exécution préférées, selon que le mouvement de l'obturateur est rotatif ou linéaire par exemple.

*Mouvement rotatif*

Le mouvement différentiel peut être entraîné par les moyens d'entraînement mécaniques classiques, tels que par exemple :

- des engrenages de rapports de transmission légèrement différents ; ces engrenages peuvent être de tous les types connus de l'homme de métier, comme par exemple des pignons cylindriques à denture droite ou hélicoïdale, une couronne dentée et vis sans fin, des pignons hypoïdes, etc. ;
- une transmission par galet ;
- une transmission par chaîne.

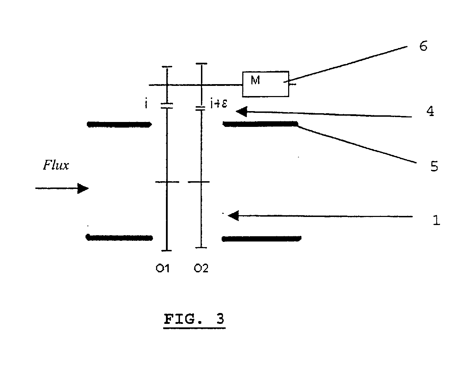

La figure 3 donne une illustration schématique pour obturateur rotatif dans une vanne 5 dont le mouvement différentiel des deux éléments O1,O2 le constituant est réalisé au moyen d'une transmission par engrenages 4 entre le moteur (actionneur) 6 et l'obturateur 1.

*Mouvement linéaire*

Le même principe peut-être appliqué pour des obturateurs linéaires (à rideaux).
Le dispositif selon l'invention présente l'avantage d'offrir une très haute précision en boucle ouverte du système de régulation, sans nécessiter de grande précision sur les pièces individuelles.

**Revendications**

1. Dispositif d'obturation pour le contrôle de précision d'un flux matériel, par exemple liquide ou gazeux, comprenant au moins un organe d'obturation (1) d'une section (3) de passage du flux, dont le mouvement est proportionnel à celui d'un actionneur (6) qui le commande, **caractérisé en ce que** ledit dispositif comprend au moins deux organes d'obturation (O1,O2) commandés par l'actionneur (6) au moyen d'une transmission (4) permettant d'obtenir des coefficients de proportionnalité légèrement différents pour le mouvement desdits organes.

**2.** Dispositif selon la revendication 1, **caractérisé en ce que** lesdits organes d'obturation (O1,O2) ont chacun un mouvement rotatif commandé par un arbre moteur (6) au moyen d'une transmission (4) permettant de leur transmettre le mouvement dudit arbre avec des rapports de transmission, de préférence de démultiplication, légèrement différents.

**3.** Dispositif selon la revendication 2, **caractérisé en ce que** ladite transmission (4) est une transmission par engrenages, par galet ou par chaîne.

**4.** Dispositif selon la revendications 2 ou 3, **caractérisé en ce qu'**il consiste en un obturateur à grille (1) où lesdits organes d'obturation (O1,O2) présentent chacun leur section de passage du flux ou ouverture (3) ayant la forme d'une section de couronne de mêmes axe (2), rayons intérieur et extérieur, leur ouverture étant limitée à un angle $\alpha$ inférieur ou égal à $2\pi$, de préférence inférieur ou égal à $\pi$.

**5.** Dispositif selon la revendication 1, **caractérisé en ce que** lesdits organes d'obturation (O1,O2) ont chacun un mouvement linéaire, de préférence sont des obturateurs-rideaux.

**6.** Utilisation d'un dispositif d'obturation selon l'une quelconque des revendications 1 à 5, dans une vanne de régulation de haute précision, par exemple dans le domaine aéronautique et spatial.

## Patentansprüche

**1.** Absperrvorrichtung für die Präzisionskontrolle eines Materialflusses, zum Beispiel flüssig oder gasförmig, die mindestens ein Absperrorgan (1) eines Abschnitts (3) des Flussdurchlaufs umfasst, dessen Bewegung proportional zu der eines Stellorgans (6) ist, das ihn steuert, **dadurch gekennzeichnet, dass** die besagte Vorrichtung mindestens zwei Absperrorgane (01, 02) umfasst, die von dem Stellorgan (6) anhand eines Getriebes (4), das es ermöglicht, für die Bewegung der besagten Organe leicht unterschiedliche Proportionalitätskoeffizienten zu erhalten, gesteuert werden.

**2.** Vorrichtung gemäß Anspruch 1, **dadurch gekennzeichnet, dass** die besagten Absperrorgane (01, 02) jeweils eine drehende Bewegung aufweisen, die von einer Antriebswelle (6) anhand eines Getriebes (4) gesteuert wird, das es ermöglicht, die Bewegung der besagten Welle mit leicht unterschiedlichen Übersetzungsverhältnissen, vorzugsweise Untersetzungsverhältnissen, auf die Organe zu übertragen.

**3.** Vorrichtung gemäß Anspruch 2, **dadurch gekennzeichnet, dass** das besagte Getriebe (4) ein Zahnrad-, Rollen- oder Kettengetriebe ist.

**4.** Vorrichtung gemäß Anspruch 2 oder 3, **dadurch gekennzeichnet, dass** sie aus einem Gitterabsperrorgan (1) besteht, bei der jedes der oben genannten Absperrorgane (01, 02) über einen eigenen Durchflussbereich oder eine eigene Öffnung (3) in Form eines Rings mit gleicher Achse (2) verfügt, innen und außen mit Speichen versehen. Die Öffnung ist auf einen Winkel $\alpha$ begrenzt, der kleiner oder gleich $2\pi$ ist, vorzugsweise kleiner oder gleich $\pi$.

**5.** Vorrichtung gemäß Anspruch 1, **dadurch gekennzeichnet, dass** beide Absperrorgane (01, 02) eine lineare Bewegung aufweisen, vorzugsweise Sperrschieber sind.

**6.** Verwendung einer Absperrvorrichtung gemäß einem der Ansprüche 1 bis 5 in einem Hochdruckregelventil, zum Beispiel in der Luft- und Raumfahrt.

## Claims

**1.** A shutter device for the precision control of a material flow, for example liquid or gaseous, comprising at least one organ (1) for shutting one passage section (3) for the flow, the motion of which is proportional to that of an actuator (6) controlling it, **characterised in that** said device comprises at least two shutter organs (O1, O2) controlled by the actuator (6) by means of a transmission (4) allowing to obtain slightly different proportionality coefficients for the motion of said organs.

**2.** Device according to Claim 1, **characterised in that** said shutter organs (O1, O2) both have a rotary motion controlled by a motor shaft (6) by means of a transmission (4) allowing to transmit to them the motion of said shaft with slightly different transmission ratios, preferably reduction ratios.

3. Device according to Claim 2, **characterised in that** said transmission (4) is a transmission by gears, roller or chain.

4. Device according to Claims 2 or 3, **characterised in that** it comprises a grid shutter (1) where said shutter organs (O1, O2) both have their passage section for the flow or opening (3) in the form of a crown section with the same axis (2), internal and external radii, their opening being limited to an angle $\alpha$ less than or equal to $2\pi$, preferably less than or equal to n.

5. Device according to Claim 1, **characterised in that** said shutter organs (O1, O2) both have a linear motion and are preferably curtain shutters.

6. The use of a shutter device according to any one of Claims 1 to 5, in a high-precision control valve, for example in the aeronautics or space sectors.

FIG. 1

FIG. 2

**FIG. 3**